# EUROPEAN PATENT APPLICATION

(11) **EP 1 260 753 A2**
(43) Date of publication of application: **27.11.2002**
(21) Application number: 02010203.4
(22) Date of filing: 15.05.2002
(51) Int. Cl.: F16P 3/00

(54) **Torque limiter with actuated safety uncoupling device, particularly for power take-offs for agricultural machines**

(30) Priority: 23.05.2001 IT MI20011086
(71) Applicant: Comer Group S.p.A., 42046 Villanova di Reggiolo (Reggio Emilia) (IT)
(72) Inventor: Brunazzi, Achille, 42040 Santa Vittoria di Gualtieri (IT)
(74) Representative: Modiano, Guido, Dr.-Ing.

(57) **Abstract**

A torque limiter (1) with actuated safety device, particularly for power take-offs for agricultural machines, which comprises an outer body (2), which is rigidly coupled to a driving shaft (3), and an inner body (4), which is rigidly coupled to a driven shaft (5) and has means (7, 8) for detachable rotary coupling to the outer body (2) which can be actuated by means of a plate (10) that can move axially with respect to the outer body, fluid-actuated means (30, 31, 32, 33) being provided for actuating the plate (10) which are supported by the inner body (4) and can be activated from the outside of the torque limiter.

## Description

The present invention relates to a torque limiter with safety device, particularly for power take-offs for agricultural machines.

As is known, a problem that is currently felt very strongly in many fields is the need to secure machines used in different production activities and in particular in the agricultural field, in which it is necessary to be able to disconnect one another the agricultural implements used on tractors and the like in order to be able to separate them from the power take-offs from which they draw their motion.

EPA-0105334.7 by the same Applicant and assumed included herein as reference, provides a safety device to be applied to the torque limiter connected to a power take-off or the like, which, generally speaking, has mechanical means that allow to perform uncoupling by acting axially on a plate that pushes radially tabs that mutually couple, respectively, the outer body connected to the driving shaft and the inner body connected to the driven shaft.

This embodiment, which has proved to be valid in many respects, has been found to be susceptible of improvements, especially as regards the plate actuation means which, by being of the mechanical type, in many cases produced a structure that was complicated and accordingly expensive.

The aim of the invention is to solve the drawback described above by providing a torque limiter with safety device that allows to actuate the plate in an axial direction without having to resort to mechanical connections of the rigid type.

Within this aim, an object of the invention is to provide a limiter that allows to achieve very easily and simply remote actuations without thereby introducing particular constructive complications.

Another object of the present invention is to provide a torque limiter which, thanks to its particular constructive characteristics, is capable of giving the greatest assurances of reliability and safety in use.

Another object of the present invention is to provide a torque limiter with safety device, particularly for power take-offs for agricultural machines, which can be obtained easily starting from commonly commercially available elements and materials and is also competitive from a merely economical standpoint.

This aim and these and other objects that will become better apparent hereinafter are achieved by a torque limiter with safety device, particularly for power take-offs for agricultural machines, comprising an outer body, which is rigidly coupled to a driving shaft, and an inner body, which is rigidly coupled to a driven shaft and has means for detachable rotary coupling to said outer body which can be actuated by means of a plate that can move axially with respect to said outer body, characterized in that it comprises fluid-actuated means for actuating said plate which are supported by said inner body and can be activated from the outside of said torque limiter.

Further characteristics and advantages of the present invention will become better apparent from the description of a preferred but not exclusive embodiment of a torque limiter with safety device, particularly for power take-offs for agricultural machines, illustrated by way of non-limitative example with the aid of the accompanying drawings, wherein:

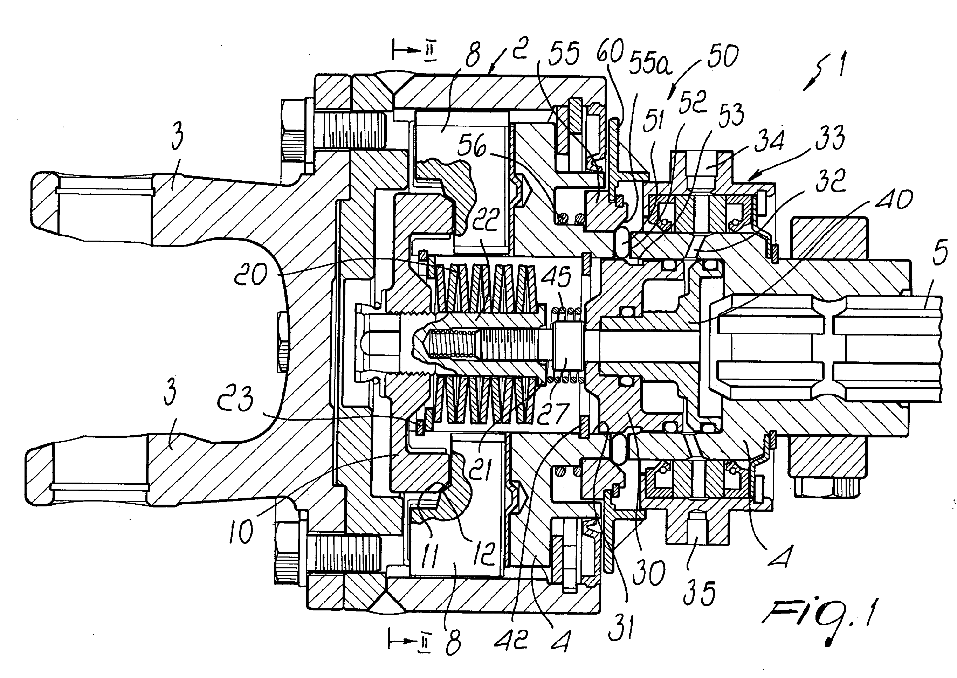

Figure 1 is a schematic sectional view of the torque limiter in the position for coupling one another the inner body and the outer body;

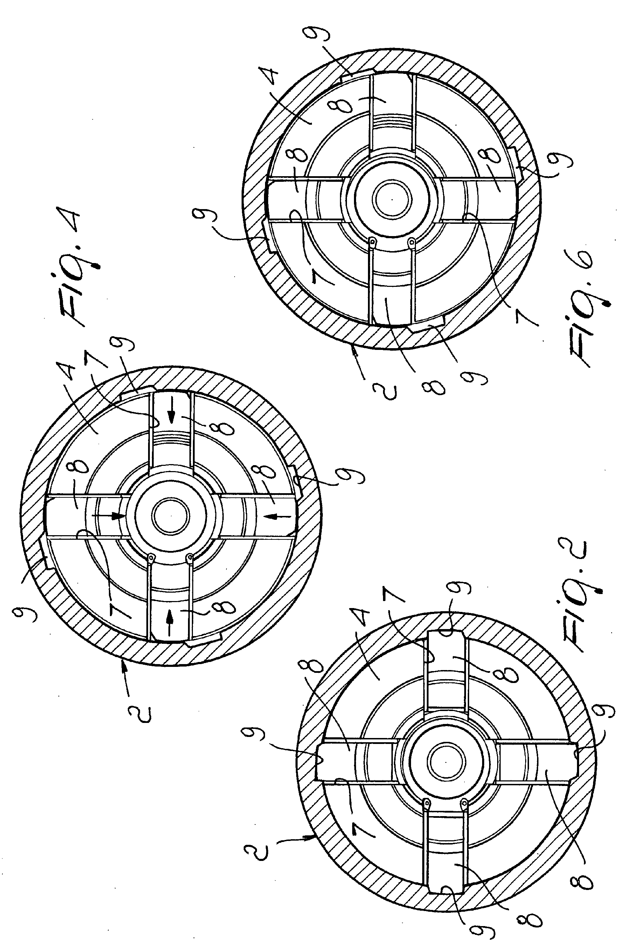

Figure 2 is a sectional view, taken along the line II-II of Figure 1, with the plate removed;

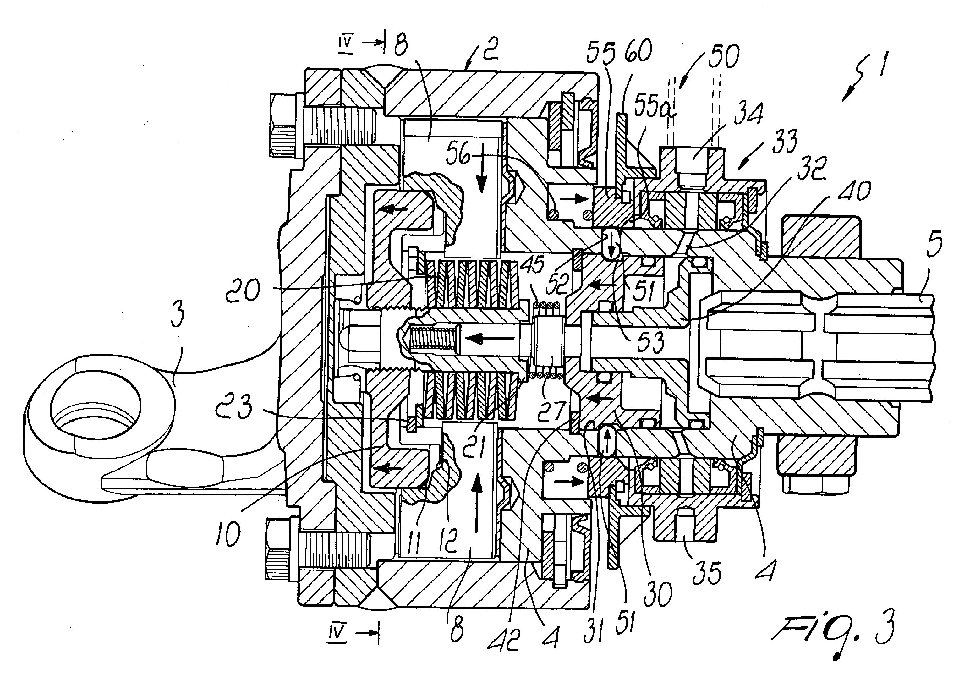

Figure 3 is a sectional view of the torque limiter when the coupling means are uncoupled;
Figure 4 is a sectional view, taken along the line IV-IV of Figure 3, with the plate removed;

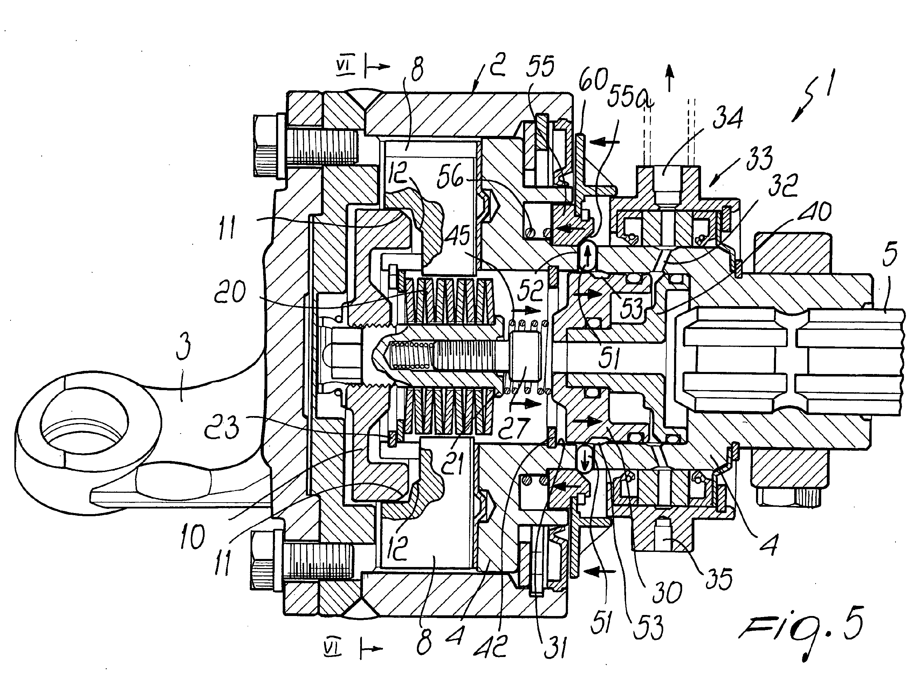

Figure 5 is a sectional view, taken along a longitudinal plane, of the torque limiter when the coupling between the inner body and the outer body is restored;
Figure 6 is a sectional view, taken along the line VI-VI of Figure 5, with the plate removed.

With reference to the figures, the torque limiter with safety device, particularly for power take-offs for agricultural machines, according to the invention, generally designated by the reference numeral 1, comprises an outer body 2, which is rigidly coupled to a driving shaft, generally designated by the reference numeral 3, which is adapted to transmit motion to an implement, not shown.

Inside the body 2 a cavity is provided that accommodates a body 4, which is rigidly coupled to a driven shaft 5 for motion transmission.

Between the inner body 4 and the outer body 2 means for the detachable rotary coupling of the inner body with the outer body are provided which are formed by multiple radial seats 7 formed in the inner body 4, in which tabs 8 can slide; in the coupling position, i.e., in the radially extracted position, such tabs have an end that engages slots 9 formed on the inner surface of the body 2.

In order to control the radial movement of the tabs 8, a plate 10 is provided, which can move axially and has a conical ring 11, which engages corresponding inclined planes 12 formed on the portion of the tabs 8 that is directed toward the plate 10.

The plate 10 is pushed elastically in an axial direction against the tabs 8 by means of a plurality of Belleville spring washers 20, which act on the flange 21 of a shank 22 that is rigidly coupled to the plate and a retention ring 23 provided on the inner body 4.

In normal operating conditions, the Belleville spring washers 20 push the plate 10 against the tabs 8, and the coupling between the conical ring 11 and the inclined planes 12 causes the radial protrusion of the tabs 8, with consequent engagement in the slots 9 and consequent rotary coupling.

In order to perform the uncoupling of the element by means of the actuation of the plate, which can move axially with respect to the outer body, fluid-actuated means for actuating the plate are provided which are supported by the inner body 4 and are constituted by a plunger 30, which can move in a chamber 31 that is formed by the inner body and is connected, by means of a duct 32, to a distribution unit 33, which can rotate freely with respect to the inner body 4.

The distribution unit 33 has at least one connector 34 for connection to a fluid-actuated circuit, preferably of the hydraulic type, and one or more connection points 35 for retention means, which in practice prevent rotation with respect to the frame of the machine.

The fluid-actuated means have a retention element 40, which is accommodated inside the chamber 31 and defines a hermetic guiding element for the plunger 30, which is pushed against the adjustment screw 27 connected to the shank 22.

The translational motion of the plunger 30 is performed by introducing oil under pressure between the plunger 30 and the retention element 40.

The introduction of oil under pressure causes the translational motion of the plunger up to a stroke limiter 42, with a consequent translational motion of the shank 22 and compression of the Belleville spring washers 20. The translational motion of the shank 22 and consequently of the plate 10 disengages the ring 11 from the inclined planes 12, and therefore the tabs 8 are free to retract radially.

It is also possible to provide an elastic return element 45, which acts between the shank 22 and the plunger 30 in order to return it into the engagement position when the pressure of the oil ceases.

In this case a manual reset element is provided, generally designated by the reference numeral 50, which is constituted by a stop element for the plunger which has stop pins 51 that can move radially with respect to the plunger and are guided in radial slots 52.

The stop pins 51 engage a groove 53 formed in the plunger 30 arranged in the uncoupling position and accordingly can retract radially, being pushed by a sleeve 55 on which a pusher spring 56 acts, said spring abutting against the inner body 5.

The sleeve 55 has a flared portion 55a, which forms a radial component for the thrust of the pins 51 in order to bring them into a locking position.

When the plunger 30 is in the uncoupling position, the sleeve 55 is made to perform an axial translational motion and consequently prevents the radial escape of the pins 51 and prevents the uncoupling of the plunger 30, which keeps the plate 10 in the uncoupling position.

In order to restore the engagement conditions, it is necessary to act intentionally on the reset unit by applying pressure, by means of a pusher ring 60, to the sleeve 55, which is subjected to an axial translational motion so as to disengage the slots 52, thus allowing the radial protrusion of the pins 51, which disengage from the groove 53, thus allowing the retracting translational motion of the plunger 30.

In these conditions, the rotational coupling between the inner body 4 and the outer body 2 can be restored, since the Belleville spring washers are preloaded to perform the axial translational motion of the plate 10 that pushes the tabs 8 radially in order to insert them in the slots and consequently provide the coupling.

It should be added to the above that it is possible to provide several elements that can be actuated intentionally to restore the coupling, such as for example one-way valves arranged on the hydraulic circuit of the oil, which can be actuated when one wishes to produce the outflow of the oil in order to produce coupling again.

The use of a hydraulic device allows to perform actuation very rapidly and easily, even remotely, with a considerable mechanical simplification of the assembly and easier handling of the thrusts involved.

From the above description it is evident that the invention achieves the intended aim and objects, and in particular the fact is stressed that a torque limiter with safety device, particularly for power take-offs for agricultural machines, has been provided which, by utilizing for coupling and uncoupling a hydraulic circuit that actuates the plate axially, allows to simplify the general structure of the torque limiter while still having rapid and effective actuations.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements, without thereby abandoning the scope of the protection of the appended claims.

The disclosures in Italian Patent Application No. MI2001A001086 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A torque limiter with safety device, particularly for power take-offs for agricultural machines, comprising an outer body, which is rigidly coupled to a driving shaft, and an inner body, which is rigidly coupled to a driven shaft and has means for detachable rotary coupling to said outer body which can be actuated by means of a plate that can move axially with respect to said outer body, **characterized in that** it comprises fluid-actuated means for actuating said plate which are supported by said inner body and can be activated from the outside of said torque limiter.

2. The torque limiter according to claim 1, **characterized in that** said fluid-actuated means for actuating the plate comprise a plunger that can move in a chamber formed by said inner body and connected to a hydraulic distribution unit that can rotate freely with respect to said inner body.

3. The torque limiter according to claim 1, **characterized in that** said distribution unit comprises a coupling for connection to a fluid-actuated circuit and at least one connection point for connection to retention means that are adapted to prevent rotation.

4. The torque limiter according to one or more of the preceding claims, **characterized in that** it comprises a retention element that is accommodated in said chamber and is adapted to constitute a guiding element for said plunger.

5. The torque limiter according to one or more of the preceding claims, **characterized in that** it comprises an adjustment screw that is associated with a stem that is connected to said plate and supports multiple Belleville spring washers which act on a flange of said shank and a retention ring provided on said inner body.

6. The torque limiter according to one or more of the preceding claims, **characterized in that** said fluid-actuated means are of the hydraulic type.

7. The torque limiter according to one or more of the preceding claims, **characterized in that** it comprises an elastic return element that acts between said shank and said plunger in order to return it to the coupling position when the pressure in said chamber ceases.

8. The torque limiter according to one or more of the preceding claims, **characterized in that** it comprises at least one manual reset element that controls the return of said plunger to the coupling position.

9. The torque limiter according to one or more of the preceding claims, **characterized in that** said manual reset element comprises stop pins that can move radially with respect to said plunger and are guided in radial slots formed in said inner body, said stop pins engaging a groove formed on the lateral surface of said plunger in order to retain it in the uncoupling position, a sleeve being further provided which can engage the outer end of said stop pins and is pushed elastically by a pusher spring that abuts against said inner body, said sleeve having a flared portion that is adapted to produce a radial thrust component on said stop pins in order to bring them into a locking position in said groove with said plunger in the uncoupling position.

10. The torque limiter according to one or more of the preceding claims, **characterized in that** it comprises a pusher ring that acts on said sleeve in contrast with said pusher spring in order to disengage said sleeve from the region affected by said slots with consequent radial protrusion of said stop pins and release of said hollows of said plunger.

11. The torque limiter according to one or more of the preceding claims, **characterized in that** said manual reset element comprises a one-way valve that is arranged on the hydraulic circuit that feeds the oil into said chamber.
